# DEMANDE DE BREVET EUROPEEN

(11) **EP 4 575 943 A1**
(43) Date de publication de la demande: **25.06.2025**
(21) Numéro de dépôt: 24219025.4
(22) Date de dépôt: 11.12.2024
(51) Int. Cl.: G06Q 10/04

(54) **PROCÉDÉ DE DÉTERMINATION D'UNE QUANTITÉ D'AU MOINS UN POLLUANT ÉMIS PAR UN ENSEMBLE DE VÉHICULES AU SEIN D'UN RÉSEAU ROUTIER**

(30) Priorité: 18.12.2023 FR 2314402
(71) Demandeur: IFP Energies nouvelles, 92500 Rueil-Malmaison (FR)
(72) Inventeur: BUSSOD, Suzanne, 92852 RUEIL-MALMAISON CEDEX (FR); SABIRON, Guillaume, 92852 RUEIL-MALMAISON CEDEX (FR); DE NUNZIO, Giovanni, 92852 RUEIL-MALMAISON CEDEX (FR); OTHMAN, Bassel, 92852 RUEIL-MALMAISON CEDEX (FR)
(74) Mandataire: IFP Energies nouvelles

(57) **Abrégé**

La présente invention concerne un procédé de détermination de la quantité de polluants (Q) émis par au moins un véhicule sur un brin d'un réseau routier, dans lequel on acquiert une vitesse moyenne (VIT) des véhicules sur les brins du réseau routier, et on utilise un modèle de débit (MDV) pour déterminer le débit de véhicules sur les brins du réseau routier, et un modèle unitaire d'émission de polluants (MUE) pour déterminer une quantité des émissions de polluants d'un unique véhicule. Enfin, pour l'ensemble de véhicules du réseau routier, on détermine une quantité agrégée (Q) des polluants émis au moyen du débit déterminé (Db), de la quantité unitaire déterminée (Qu), ainsi que la répartition des styles de conduites (DSC) et de l'état thermique des véhicules (DTH).

## Description

### Domaine technique

La présente invention concerne le domaine de la détermination des émissions polluantes émises par un ensemble de véhicules sur un réseau routier.

Aujourd'hui, l'Organisation Mondiale de la Santé (OMS) décrit la pollution atmosphérique comme l'un des plus grands risques environnementaux pour la santé, ayant un impact direct sur les accidents vasculaires cérébraux, les cardiopathies, les cancers du poumon, et les affections respiratoires, chroniques ou aiguës, y compris l'asthme. En 2019, 99% de la population mondiale vivaient dans des endroits où les concentrations de polluants ne respectaient pas les seuils préconisés par l'OMS. La responsabilité du trafic routier est évidente en termes de pollution de l'air. En France, le Ministère de la Transition écologique déclare ainsi que le transport routier est responsable de 65% à 100% de l'ensemble des émissions des transports selon les polluants. A Paris, 65% des émissions d'oxyde d'azote et 50% des émissions totales de particules PM10 sont dues au trafic routier.

Les transports, tous modes confondus, sont responsables d'environ 50% des émissions globales d'oxydes d'azote (NOₓ) et environ 10% des émissions de particules PM2,5 (c'est-à-dire des particules d'un diamètre inférieur à 2.5 microns). Le transport routier seul représente une part considérable de cet apport dû aux transports, avec 58% des émissions de NOₓ et 73% des émissions de particules PM2,5. Ces émissions sont dues principalement à trois facteurs : les émissions à l'échappement, les émissions d'abrasion, les émissions d'évaporation. Si les poids lourds sont les principaux émetteurs de polluants, ce sont les véhicules particuliers, plus représentés dans les zones urbaines fortement peuplées, qui ont l'impact le plus élevé sur l'exposition des citoyens à une mauvaise qualité de l'air.

Les mesures mises en place au niveau local pour gérer l'utilisation des transports (comme une meilleure planification des transports et les mesures pour inciter le transfert modal, c'est-à-dire le changement de mode de transport), ainsi que le progressif renouvellement du parc automobile, ont contribué à limiter les émissions de gaz à l'échappement du transport routier dans les villes et les agglomérations urbaines. En effet, dans le monde, l'activité liée au transport routier a augmenté d'un quart au cours de la dernière décennie, alors que les émissions de NOₓ ont augmenté de 5% et les émissions de particules ont diminué de 6%. Malgré ces améliorations, les niveaux de pollution dépassent encore les seuils fixés par l'OMS dans de nombreuses villes.

Pour améliorer significativement la qualité de l'air sur leur territoire, les collectivités territoriales en milieu urbain se doivent d'agir pour réduire les émissions liées au transport routier. A titre d'exemple, à l'heure actuelle, ce secteur représente sur le territoire de la Métropole de Lyon respectivement les deux tiers des émissions totales d'oxydes d'azote (NOₓ) et un tiers des émissions totales de particules PM10. Pourtant, à ce jour, les équipes du service Voirie Mobilité Urbaine de cette collectivité n'ont pas d'outils leur permettant de déterminer l'impact sur la qualité de l'air des aménagements routiers. Les prises de décisions en rapport avec ces sujets ne tiennent donc pas compte de l'impact sur les émissions, faute d'outils.

Plus précisément, aujourd'hui, les outils opérationnels qui permettent aux villes et aux gestionnaires de route d'estimer les émissions de polluants et de gaz à effet de serre sur les différents tronçons d'un réseau routier sont les modèles macroscopiques basés sur les facteurs d'émissions (un coefficient multiplicatif fonction de la vitesse moyenne sur le tronçon). En général, il est connu qu'à parité de vitesse moyenne, deux tronçons de route différents (par exemple un tronçon urbain en circulation fluide et un tronçon autoroutier congestionné) peuvent présenter des niveaux d'émissions très contrastés, qui seraient très mal représentés par un unique facteur d'émissions.

Par conséquent, il s'avère difficile pour les villes de prendre les bonnes décisions en matière d'aménagement de l'infrastructure routière et de législation sans avoir à disposition des outils précis d'évaluation et de projection d'impact des mesures envisagées sur les émissions polluantes du transport routier et la qualité de l'air. Ces nouveaux outils devraient idéalement permettre d'évaluer l'impact des mesures sur des échelles temporelles et spatiales très fines (de l'ordre d'une minute, et de l'ordre de dix mètres).

### Technique antérieure

La première approche visant à estimer les émissions d'un véhicule à partir de sa dynamique consiste simplement à effectuer des tests d'émissions sur banc dynamométrique. La mesure des polluants permet par exemple d'établir des matrices qui donnent un taux d'émission de polluant moyen associé à des valeurs de vitesse et d'accélération du véhicule considéré. Toutefois, les données issues de tels essais ne sont pas représentatives des conditions réelles de conduite dans la mesure où elles caractérisent essentiellement des régimes de fonctionnement stationnaires du moteur du véhicule.

Pour remédier à ce problème, des systèmes portables de mesure des émissions ont été développés depuis les années 1990 afin d'associer les émissions aux dynamiques des véhicules en conditions réelles. A partir de ces données, des modèles plus précis, dits microscopiques, peuvent être établis pour donner le taux d'émission instantané d'un véhicule en fonction de sa dynamique. Il peut par exemple s'agir de réseaux de neurones, ou de modèles de régression linéaire.

Pour aller plus loin, certains de ces modèles préalablement calibrés à partir de données expérimentales ont également été validés en conduite réelle.

Les systèmes portables de mesure des émissions conviennent pour la caractérisation de quelques véhicules spécifiques, mais pas pour des mesures à très grande échelle, notamment en raison du coût associé à leur utilisation. Une solution alternative pourrait être de mesurer indirectement les émissions du trafic à l'aide de capteurs de la qualité de l'air, mais il est difficile d'associer la pollution à sa source. Ainsi, lorsqu'il est question d'estimer les émissions de polluants d'un véhicule pour lequel ce genre de données n'est pas à disposition, une alternative consiste à les calculer en utilisant un modèle microscopique physique, qui prend de manière additionnelle en entrée les caractéristiques du véhicule en question (poids, motorisation, etc.), tel que décrit dans le document Gârtner, U., Hohenberg, G., Daudel, H., & Oelschlegel, H. (2004). Development and application of a semi-empirical NOx model to various HD diesel engines. In Thermo-and Fluid Dynamic Processes in Diesel Engines 2 (pp. 285-312). Springer, Berlin, Heidelberg, ou dans le modèle très répandu dit « Comprehensive Modal Emission Model (CMEM) » de l'Université de Californie, qui est une combinaison de modèles physiques paramétrables (tel que décrit dans le document Barth, M., An, F., Younglove, T., Scora, G., Levine, C., Ross, M., & Wenzel, T. (2000). Comprehensive Modal Emission Model (CMEM), version 2.0 user's guide. University of California, Riverside, 4.).

Ces modèles microscopiques, qu'ils soient basés sur des données ou sur un modèle physique, sont toutefois coûteux en temps de calcul et en ressources informatiques (mémoire et processeur) pour les calculs et sont donc en général essentiellement conçus pour des études hors ligne. De plus, ils requièrent des profils de vitesse dynamiques précis qui ne sont en pratique que rarement mesurés. Il est possible de simuler ces profils de vitesse dynamiques à partir d'une méthode d'apprentissage. Celle-ci nécessite cependant un grand nombre de simulations dans les mêmes conditions pour être considérée comme pertinente (telle que décrite par exemple dans la publication De Nunzio, G., Laraki, M. & Thibault, L. (2021) « Road Traffic Dynamic Pollutant Emissions Estimation: From Macroscopic) Road Information to Microscopic Environmental Impact », ATMOSPHERE, Vol12, N°1, 31/12/2020, pages 53), donc elle nécessite beaucoup de moyens de calcul/ beaucoup de temps de calcul. Ainsi, une autre catégorie de modèles, dits macroscopiques, a été développée pour estimer les émissions à grande échelle lorsque la complexité numérique devient trop grande, ou lorsque les trajectoires individuelles des véhicules ne sont pas à disposition. Parmi les modèles d'émissions macroscopiques, l'approche la plus répandue consiste à introduire des facteurs d'émission (FE) (tels que décrits dans les documents Ntziachristos, L., Gkatzoflias, D., Kouridis, C., & Samaras, Z. (2009). COPERT: a European road transport émission inventory model. In Information technologies in environmental engineering (pp. 491-504) et Yu, L., Xu, Y., Song, G., Hao, Y., Guo, S., & Shi, Q. (2009). Development and application of macroscopic émission model for China. Transportation research record, 2123(1), 66-75. Springer, Berlin, Heidelberg.). Les facteurs d'émission FE correspondent à des valeurs moyennes d'émissions de polluant par véhicule et par distance parcourue. Dans la plupart des cas, cette approche est basée sur des véhicules « moyens » avec un style de conduite « moyen » afin d'être représentatif du niveau d'émissions lors du passage à grande échelle. Les approches dites « COPERT » (de l'anglais « COmputer Program to calculate Emissions from Road Transports », pouvant être traduit par programme informatique de calcul des émissions des transports routiers et décrit dans le document Ntziachristos, L., Gkatzoflias, D., Kouridis, C., & Samaras, Z. (2009). COPERT: a European road transport émission inventory model. In Information technologies in environmental engineering (pp. 491-504). Springer, Berlin, Heidelberg.) et «HBEFA» (Hausberger, S. (2009). Emission Factors from the Model PHEM for the HBEFA Version 3.) sont des modèles macroscopiques très répandus basés sur des facteurs d'émission FE. Ce genre de modèles convient très bien pour la réalisation de bilans d'émissions véhiculaires à l'échelle régionale ou nationale. Il peut également permettre d'estimer de manière assez précise les émissions associées à des trajets longs. Toutefois, l'approche associée aux facteurs d'émission FE n'est par définition pas suffisamment précise lorsqu'il s'agit d'estimer les émissions réelles sur une petite échelle, car elle ne tient pas compte de l'impact de l'infrastructure locale et du style de conduite ; ainsi, leur principale cause d'erreur provient de l'impact du style de conduite et de la pente.

Il est également possible de calculer plus précisément les émissions unitaires sur des territoires avec des modèles mésoscopiques qui prennent en entrée, par exemple, le nombre d'arrêts par unité de distance et la durée de ces arrêts, en plus de la vitesse moyenne. Il est aussi possible de prédire la consommation d'un véhicule de manière mésoscopique, de là peuvent en découler les émissions de certains polluants. Par exemple, la demande de brevet FR3122011A1 (US 2022/0335822) décrit un procédé de détermination d'une quantité de polluants émis à l'échelle mésoscopique. Toutefois, ce modèle peut être parfois imprécis, car il ne prend pas en compte des variations liées aux déplacements des véhicules.

### Résumé de l'invention

Le procédé selon l'invention a pour but de déterminer de manière précise une quantité d'émissions polluantes émises par un ensemble de véhicules sur un réseau routier en prenant en compte l'impact de la congestion, de la signalisation et de la topographie du réseau routier (pente, aménagement de la voirie, etc.), ainsi que de l'impact des variations liées aux déplacements des véhicules au sein du réseau routier, le tout avec des besoins informatiques (processeurs et mémoires) limités. De plus, le procédé selon l'invention a pour objectif d'être adapté à toute dimension du réseau routier considéré. Dans ces buts, l'invention concerne un procédé de détermination de la quantité de polluants émis par au moins un véhicule sur un brin d'un réseau routier, dans lequel on acquiert une vitesse moyenne des véhicules sur les brins du réseau routier, et on utilise un modèle de débit pour déterminer le débit de véhicules sur les brins du réseau routier, et un modèle unitaire d'émission de polluants (microscopique ou mésoscopique) pour déterminer une quantité des émissions de polluants d'un unique véhicule. Enfin, pour l'ensemble de véhicules du réseau routier, on détermine une quantité agrégée des polluants émis au moyen du débit déterminé, de la quantité unitaire déterminée, ainsi que la répartition des styles de conduites et de l'état thermique des véhicules (i.e. l'état thermique d'un système de post-traitement équipant le véhicule, en d'autres termes une indication si le système de post-traitement est chaud ou froid, ce qui traduit son efficacité en particulier pour les Nox). Une particularité de l'invention est de prévoir un modèle unitaire de polluants pour chaque style de conduite et pour chaque état thermique, ainsi, la détermination de la quantité agrégée de polluants est plus précise qu'un modèle macroscopique, tout en utilisant des ressources informatiques plus limitées qu'un modèle microscopique.

L'invention concerne un procédé de détermination d'une quantité d'au moins un polluant émis par un ensemble de véhicules au sein d'un réseau routier, ledit réseau routier comprenant un ensemble de brins caractérisés par des données macroscopiques parmi lesquelles la topographie desdits brins, le déplacement desdits véhicules au sein dudit réseau routier étant caractérisé par au moins deux styles de conduite et par au moins deux états thermiques des véhicules. Pour ce procédé, on met en oeuvre les étapes suivantes :
a. On acquiert une vitesse moyenne de véhicule pour chaque brin dudit réseau routier ;
b. On détermine un débit de véhicules pour chaque brin dudit réseau routier à partir de ladite vitesse moyenne acquise au moyen d'un modèle de débit de véhicules qui relie le débit de véhicules, la vitesse moyenne de véhicules et lesdites données macroscopiques dudit brin ;
c. Pour chaque brin, on détermine, pour chaque style de conduite et pour chaque état thermique des véhicules, une quantité unitaire dudit au moins un polluant émis par un unique véhicule à partir de ladite vitesse moyenne acquise et d'un modèle unitaire d'émissions de polluants ; et
d. On détermine pour chaque brin dudit réseau routier une quantité agrégée dudit au moins un polluant pour l'ensemble des véhicules, à partir dudit débit de véhicules déterminé, desdites quantités unitaires dudit au moins un polluant émis par un unique véhicule, et en fonction d'une répartition des styles de conduite des véhicules au sein du réseau routier, et d'une répartition desdits états thermiques des véhicules au sein du réseau routier.

Toutes ou partie d'entre ces étapes sont notamment mises en oeuvre par des moyens informatiques.

Selon un mode de réalisation, on détermine ladite quantité agrégée d'au moins un polluant émis pour l'ensemble des véhicules en considérant en outre des données d'un parc automobile associé audit réseau routier considéré. Ainsi, l'invention procède à une détermination de la quantité agrégée de polluants, ce qui utilise des ressources informatiques bien plus limitées, donc permet d'obtenir des résultats bien plus rapidement que, par exemple, dans la publication dans la publication De Nunzio, G., Laraki, M. & Thibault, L précitée.

Conformément à une mise en oeuvre, ledit modèle unitaire d'émissions de polluants est un modèle mésoscopique unitaire d'émissions de polluants, ledit modèle mésoscopique unitaire d'émissions de polluants étant une régression multivariable de la quantité des émissions de polluant par style de conduite et par état thermique du véhicule.

Avantageusement, on construit ledit modèle mésoscopique unitaire d'émissions de polluant par une méthode d'apprentissage automatique ou d'apprentissage profond entraîné sur une base d'apprentissage formée sur un réseau routier d'apprentissage comprenant la vitesse moyenne de véhicule sur les brins dudit réseau routier d'apprentissage, des données macroscopiques desdits brins dudit réseau routier d'apprentissage, et des données acquises d'une quantité unitaire d'émissions dudit au moins un polluant sur ledit réseau routier d'apprentissage.

Selon une option de réalisation, on détermine une quantité unitaire dudit au moins un polluant émis par un unique véhicule au moyen des étapes suivantes :
i. On détermine, pour chaque brin, pour chaque style de conduite, un profil de vitesse dudit unique véhicule sur ledit brin à partir de ladite vitesse moyenne et desdites données macroscopiques dudit brin ;
ii. Pour chaque brin, on détermine, pour chaque style de conduite et pour chaque état thermique dudit véhicule, ladite quantité unitaire dudit au moins un polluant au moyen d'un modèle microscopique unitaire d'émissions de polluant appliqué audit profil de vitesse dudit unique véhicule.

De manière avantageuse, on construit ledit profil de vitesse au moyen d'un modèle de profil de vitesse construit par une méthode d'apprentissage automatique ou d'apprentissage profond entraîné sur une base d'apprentissage formé sur un réseau routier d'apprentissage, ladite base d'apprentissage comprenant la vitesse moyenne de véhicule sur les brins dudit réseau routier d'apprentissage, des données macroscopiques desdits brins dudit réseau routier d'apprentissage, et des données acquises de vitesse instantanée d'au moins un véhicule sur lesdits brins dudit réseau routier d'apprentissage.

Avantageusement, on construit ledit modèle microscopique unitaire d'émissions de polluants par une méthode d'apprentissage automatique ou d'apprentissage profond entraîné sur une base d'apprentissage formé sur un réseau routier d'apprentissage comprenant le profil de vitesse de véhicules au sein dudit réseau routier d'apprentissage, des données macroscopiques desdits brins dudit réseau routier d'apprentissage, et des données acquises de quantité unitaire d'émissions de polluant sur lesdits brins dudit réseau routier d'apprentissage.

Selon une configuration, lesdites données macroscopiques d'un réseau routier sont choisies parmi la topologie du brin du réseau routier, le nombre de voies du brin du réseau routier, la vitesse maximale autorisée du brin du réseau routier, la pente du brin du réseau routier, la signalisation du brin du réseau routier, la longueur du brin du réseau routier, de préférence lesdites données macroscopiques dudit réseau routier étant fournies par un système d'information géographique.

Conformément à un mode de réalisation, on acquiert ladite vitesse moyenne des véhicules par mesure et/ou au moyen d'un système d'information géographique.

Selon une mise en oeuvre, on construit ledit modèle de débit par une méthode d'apprentissage automatique ou d'apprentissage profond entraîné sur une base d'apprentissage formé sur un réseau routier d'apprentissage comprenant le débit de véhicules au sein dudit réseau routier d'apprentissage, des données macroscopiques desdits brins dudit réseau routier d'apprentissage, et la vitesse moyenne des véhicules sur lesdits brins dudit réseau routier d'apprentissage

Conformément à un aspect, on affiche ladite quantité d'au moins un polluant émis par l'au moins un véhicule sur ledit au moins un brin dudit réseau routier sur une carte routière, de préférence au moyen d'un téléphone intelligent ou d'un système informatique.

D'autres caractéristiques et avantages du procédé selon l'invention, apparaîtront à la lecture de la description ci-après d'exemples non limitatifs de réalisations, en se référant aux figures annexées et décrites ci-après.

### Liste des figures

La figure 1 illustre les étapes du procédé selon un premier mode de réalisation de l'invention.
La figure 2 illustre les étapes du procédé selon un deuxième mode de réalisation de l'invention.
La figure 3 illustre les étapes du procédé selon un troisième mode de réalisation de l'invention.
La figure 4 illustre une partie des étapes du procédé selon une variante de réalisation de l'invention.
La figure 5 illustre, pour un exemple, des courbes de la quantité de CO₂ émis par des véhicules sur un brin routier en fonction de la vitesse moyenne des véhicules, une courbe étant déterminée par une méthode selon un art antérieur, et les deux autres courbes étant déterminées au moyen d'un mode de réalisation du procédé selon l'invention en fonction de deux vitesses limites.
Les figures 6A à 6D illustrent, pour un exemple, une représentation des quantités de polluants émis sur un réseau routier, les figures 6A, 6B et 6C correspondant à différents styles de conduites, et la figure 6D correspondant à une détermination selon un art antérieur.

### Description des modes de réalisation

La présente invention concerne un procédé de détermination de la quantité d'au moins un polluant d'au moins un véhicule sur au moins un brin d'un réseau routier. Ainsi, de manière générale, le procédé permet de déterminer la quantité de polluants d'un véhicule ou d'une pluralité de véhicules qui circulent sur une portion d'un réseau routier. La quantité de polluants (également appelée quantité d'émissions polluantes) peut, par exemple, être exprimée en masse par distance, ou en concentration, ou en volume par distance. Le réseau routier est constitué de l'ensemble des routes pour un territoire donné, par exemple pour un pays ou pour une région, ou pour une ville, un quartier d'une ville, etc. Un brin du réseau routier est une subdivision élémentaire du réseau routier entre deux noeuds consécutifs du réseau routier. Par exemple, un brin du réseau routier peut être une route entre deux intersections consécutives, entre deux signalisations consécutives, entre une intersection et une signalisation, ou une partie d'autoroute entre deux sorties consécutives, etc. Ainsi, on dispose d'un découpage fin du réseau routier, et d'un modèle qui est adapté au réseau routier sans données microscopiques. Ainsi, ce découpage permet d'obtenir une détermination des émissions polluantes la plus représentative possible à une échelle spatiale fine.

Chaque brin du réseau routier est caractérisé par au moins une donnée macroscopique, en particulier la topologie (c'est-à-dire la pente, les virages, les intersections, la signalisation, etc.). Selon un aspect de l'invention, les données macroscopiques du réseau routier peuvent être la topologie (c'est-à-dire la pente, les virages, les intersections, la signalisation, etc.), le nombre de voies du brin du réseau routier, la vitesse maximale autorisée du brin du réseau routier, la pente du brin du réseau routier, la signalisation du brin du réseau routier, la longueur du brin du réseau routier, de préférence lesdites données macroscopiques dudit réseau routier étant fournies par un système d'information géographique. De préférence, les données macroscopiques du réseau routier peuvent être fournies par un système d'information géographique SIG (en anglais GIS Geographic Information System). Here Maps ^{™}, Google Maps ^{™}, OpenStreetMap ^{™} sont des exemples de système d'information géographique. Les données macroscopiques sont des données réelles toujours disponibles et depuis n'importe quel lieu.

Au moins deux styles de conduites sont associés au réseau routier pour caractériser le comportement des véhicules au sein du réseau routier. Etant donné que les émissions de polluants sont directement liées au style de conduite, la prise en compte de ceux-ci permet une meilleure précision de la quantité de polluants émis. En effet, la prise en compte d'un unique style de conduite sous-estime l'impact des styles de conduite les plus polluants. Par exemple, le style de conduite peut être choisi parmi une conduite souple (avec des accélérations et des décélérations faibles), une conduite moyenne (avec des accélérations et des décélérations moyennes), une conduite agressive (avec des accélérations et des décélérations importantes). Des seuils peuvent être définis pour les accélérations et décélérations pour caractériser chaque conduite. De plus, on associe au réseau routier une répartition (distribution) des styles de conduite au sein du réseau routier. Par exemple : pour un réseau routier, on peut associer 25 % de conduite souple, 50 % de conduite moyenne et 25% de conduite agressive. Selon un autre exemple, on pourrait avoir une répartition variable par brin routier, ou par portion du réseau routier. De manière avantageuse, ces styles de conduite et cette répartition peuvent être déterminés à partir de mesure de vitesses instantanées des véhicules au sein du réseau routier. En variante, ces styles de conduite et cette répartition peuvent être prédéterminés.

Au moins deux états thermiques des véhicules sont associés au réseau routier pour caractériser le comportement polluant des véhicules au sein du réseau routier. On appelle état thermique d'un véhicule, l'état thermique d'un système de post-traitement équipant le véhicule, lorsqu'il s'agit d'un véhicule à moteur thermique. Autrement dit, l'état thermique du véhicule est représentatif de la température du système de post-traitement équipant le véhicule. En effet, lorsqu'un véhicule démarre, le système de post-traitement est généralement à une température inférieure à sa température de fonctionnement optimal, par conséquent, le véhicule va émettre plus de polluants. Au contraire, lorsqu'un véhicule est en fonctionnement depuis un certain temps, le système de post-traitement est généralement à une température supérieure ou égale à sa température de fonctionnement optimal, par conséquent, les émissions de polluants du véhicule sont limitées. La prise en compte de ces états thermiques permet donc une estimation précise de la quantité de polluants émis. Par exemple, l'état thermique du véhicule peut être choisi parmi un véhicule froid (avec une température du système de post-traitement inférieur à un seuil prédéterminé) et un véhicule chaud (avec une température du système de post-traitement supérieur à un seuil prédéterminé). De plus, on associe au réseau routier une répartition (distribution) des états thermiques au sein du réseau routier. Par exemple : pour un réseau routier, on peut associer 15 % de véhicules froids et 85 % de véhicules chauds. Selon un autre exemple, on pourrait avoir une répartition variable par brin routier, ou par portion du réseau routier. De manière avantageuse, ces états thermiques et cette répartition, peuvent être déterminées à partir de mesure des temps de trajets des véhicules au sein du réseau routier. En variante, ces états thermiques et cette répartition peuvent être prédéterminés, notamment en fonction du type de réseau routier considéré : sur autoroute, l'état thermique des véhicules est globalement similaire, avec des systèmes de post traitement à une température élevée, alors qu'en agglomération, plusieurs états thermiques sont présents.

Le procédé selon l'invention peut permettre de déterminer les émissions polluantes d'au moins un des polluants (incluant les composés gazeux et/ou les particules) choisis parmi : les oxydes d'azote NOₓ, le dioxyde de carbone CO₂, le monoxyde de carbone CO, les particules fines PM, les hydrocarbures non brûlés, etc.

De préférence, le véhicule est un véhicule motorisé circulant au sein du réseau routier, tel qu'un véhicule automobile, un deux-roues, un poids lourd, un car, un bus.

Avantageusement, le procédé selon un mode de réalisation de l'invention peut déterminer la quantité de polluants pour une pluralité de véhicules se déplaçant sur le réseau routier. Ainsi, l'invention permet de mesurer la quantité de polluants pour un ensemble de véhicules, assurant ainsi une détermination de la quantité de polluants pour au moins un brin du réseau routier, de préférence sur une pluralité de brins du réseau routier.

Dans la présente demande, l'expression « quantité unitaire de polluants » désigne une quantité de polluants émis par un unique véhicule sur un brin du réseau routier par unité de distance (elle peut s'exprimer en mg/km), l'expression « quantité agrégée de polluants » désigne une quantité de polluants émis par l'ensemble de véhicules sur un brin du réseau routier, par unité de temps (elle peut s'exprimer en mg/s).

Selon l'invention, on met en oeuvre les étapes suivantes :
A- Acquisition des vitesses moyennes
B- Détermination d'un débit de véhicules
C- Détermination d'une quantité unitaire de polluants
D- Détermination d'une quantité agrégée de polluants

Ces étapes peuvent être mises en oeuvre par des moyens informatiques (serveur, ordinateur, etc.). Les étapes B et C peuvent être réalisées dans cet ordre, simultanément ou en ordre inverse. Ces étapes seront détaillées dans la suite de la description.

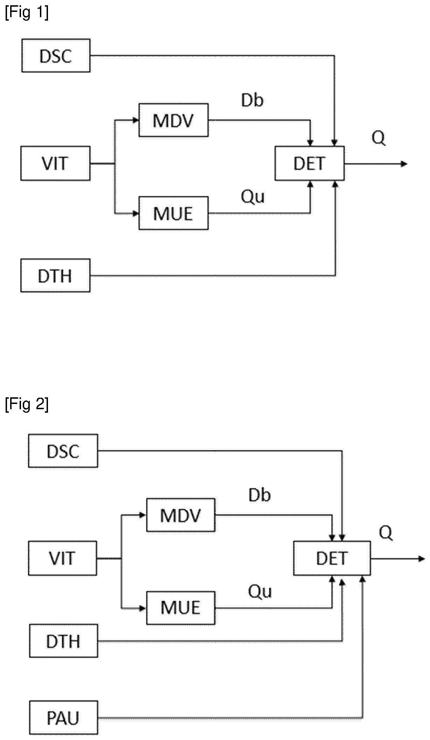

La figure 1 illustre schématiquement et de manière non limitative, les étapes du procédé de détermination d'une quantité d'émissions de polluants selon un premier mode de réalisation de l'invention. Dans un premier temps, on acquiert une vitesse moyenne VIT des véhicules au sein du réseau routier. A partir de cette vitesse moyenne VIT, on détermine d'une part un débit de véhicule Db pour chaque brin du réseau routier au moyen d'un modèle de débit MDV, et part on détermine une quantité unitaire de polluants émis Qu au moyen d'un modèle unitaire de quantité de polluants émis. On détermine ensuite une quantité agrégée de polluants émis Q, au moyen du débit Db, de la quantité unitaire Qu, ainsi qu'une répartition des styles de conduits DSC et qu'une répartition des états thermiques DTH.

### A- Acquisition des vitesses moyennes

Lors de cette étape, on acquiert une vitesse moyenne des véhicules pour chaque brin du réseau routier. Grâce à cette vitesse moyenne, on peut estimer la quantité de polluants émis pour chaque brin d'un réseau routier.

Selon une variante de réalisation, on peut acquérir cette vitesse moyenne par mesure de vitesses instantanées des véhicules au sein du réseau routier. Ces vitesses instantanées peuvent être mesurées notamment au moyen d'un téléphone intelligent, ou au moyen d'un système de géolocalisation (tel qu'un capteur de positionnement par satellite, tel que le système GPS - de l'anglais Global Positioning System-, le système Galileo, etc), ou au moyen d'une instrumentation d'au moins un véhicule, ou tout moyen analogue. La mesure au moyen d'un téléphone intelligent permet une mesure à grande échelle sans instrumentation nécessaire d'une pluralité de véhicules.

Conformément à une mise en oeuvre de l'invention, cette étape peut mettre en oeuvre une base de données FCD (de l'anglais « floating car data » pouvant être traduit par données de trajets réalisés et mesurés). A titre d'exemple non limitatif, la base de données FCD utilisée peut contenir environ deux millions de mesure de vitesse instantanée pour environ deux cent mille brins du réseau routier.

Selon une autre variante de réalisation, on peut acquérir cette vitesse moyenne à partir d'un système d'information géographique (SIG), le cas échéant, celui qui comprend les données macroscopiques du réseau routier. Ainsi la vitesse moyenne peut être disponible à tout moment et pour tous les brins.

Cumulativement à ces réalisations, on peut générer au moins une vitesse instantanée par un simulateur microscopique de trafic ou un simulateur macroscopique de trafic, le simulateur est dument calibré avec des mesures de trajets réalisés. Le simulateur dit « SUMO » (pour « Simulation of Urban Mobility » pouvant être traduit par simulation de mobilité urbain) est un exemple de simulateur microscopique de trafic open-source. Cette vitesse instantanée simulée permet de déduire ensuite une vitesse moyenne, ce qui permet de mettre en oeuvre le procédé selon l'invention pour des réseaux routiers avec un nombre limité de mesures, ou permet de prédire les émissions de polluants pour une nouvelle architecture du réseau routier ou pour une modification d'une architecture du réseau routier.

### B- Détermination du débit de véhicules

Lors de cette étape, on détermine, pour chaque brin du réseau routier, un débit de véhicules. Cette étape met en oeuvre un modèle de débit de véhicules et la vitesse moyenne acquise à l'étape A. Le modèle de débit de véhicules est un modèle qui relie le débit de véhicules, la vitesse moyenne de véhicules et les données macroscopiques du brin considéré, le modèle de débit de véhicule étant également dépendant du temps (heure, jour, saison, ...). Ainsi, le modèle de débit a en entrée une vitesse moyenne de chaque brin du réseau routier et des données macroscopiques, un instant (heure, jour, saison, ...) et en sortie un débit de véhicule du brin considéré.

Etant donné que les données de trafic sont variables dans le temps (pour traduire par exemple les heures de congestion de début et de fin de journée, ou pour traduire le jour de la semaine, ou pour traduire le mois de l'année, les périodes de vacances scolaires, les jours fériés, etc.), le modèle de débit de véhicules ainsi construit détermine un débit qui dépend du moment considéré, rendant la détermination du débit précise à l'échelle temporelle considérée.

Selon un mode de réalisation de l'invention, on peut construire le modèle de débit par une méthode d'apprentissage automatique (de l'anglais « machine learning ») ou d'apprentissage profond (de l'anglais « deep learning ») entraîné sur une base d'apprentissage formée sur un réseau routier d'apprentissage comprenant le débit de véhicules au sein dudit réseau routier d'apprentissage, des données macroscopiques des brins dudit réseau routier d'apprentissage, et la vitesse moyenne des véhicules sur lesdits brins du réseau routier d'apprentissage. Le réseau routier d'apprentissage est un réseau routier pour lequel on connaît le débit pour la construction du modèle de débit. Le réseau routier d'apprentissage peut être différent ou identique du réseau routier considéré pour la mise en oeuvre du procédé.

Pour cette réalisation, on peut construire le modèle de débit maximal par apprentissage automatique, de préférence par apprentissage automatique supervisé, de manière préférée par apprentissage automatique supervisé de régression. Etant donné que l'invention proposée considère le débit mesuré en certains points et les données macroscopiques du réseau routier pour l'apprentissage automatique, le modèle du débit de véhicules est précis et représentatif.

Selon un exemple de réalisation, le modèle du débit de véhicules D_{M} peut s'écrire :
*D_{M}*(*t*) = *f*(*Top, pente, Vmoy, t*) avec t le moment considéré (heures, jour, mois, etc.), Top la topologie du brin routier, pente la pente du brin routier, V_{moy} la vitesse moyenne sur le brin routier. Top, pente sont des exemples de données macroscopiques. De manière générale, la fonction f peut dépendre d'autres données macroscopiques du réseau routier telles que celles listées précédemment (par exemple, le type de brin routier, le nombre de voies du brin routier, la vitesse maximale et la longueur du brin routier).

La fonction f peut être déterminée à partir d'un algorithme d'apprentissage supervisé de régression, tel qu'une machine à vecteur de support (SVM de l'anglais « support vector machine »), un réseau de neurones, une forêt aléatoire ou une combinaison de ces méthodes. A titre d'exemple non limitatif, le procédé peut mettre en oeuvre un réseau de neurones avec deux couches cachées de vingt et quinze neurones respectivement, ou peut mettre en oeuvre une forêt aléatoire avec vingt estimateurs (ou arbres) de profondeur égale à 15, ou tout algorithme équivalent.

Selon un aspect, cette étape peut inclure une méthode de validation, de préférence une méthode de validation croisée, notamment une méthode de validation croisée à k-blocs (« k-fold »). Cette méthode de validation croisée permet de réduire les problèmes de « surapprentissage » et d'améliorer la précision du modèle.

Avantageusement, le modèle de débit peut prendre en entrée des données topographiques, temporelles, de population, et de congestion afin d'estimer le débit véhiculaire sur chacun des brins de la zone d'étude, ainsi que des mesures avec des capteurs fixes en certains points du réseau routier. Les données de congestion correspondent typiquement à la vitesse moyenne observée. Pour cette réalisation, on peut mettre en oeuvre les différentes variantes décrites dans la demande de brevet FR3129021.

Conformément à une mise en oeuvre, il est possible d'utiliser des données additionnelles telles que le nombre de comptage Floating Car Data (FCD) sur chaque brin. En sortie, le modèle donne les prédictions de débit sur chaque brin de la zone d'étude. Ce modèle de trafic est capable de capter les variations journalières avec, pour un même brin, un fort débit et une faible vitesse en heure de pointe et un faible débit et une forte vitesse en heure creuse. Pour cette réalisation, on peut mettre en oeuvre les différentes variantes décrites dans la demande de brevet FR3134472.

### C- Détermination d'une quantité unitaire de polluants

Lors de cette étape, on détermine une quantité unitaire de polluants émis par un seul véhicule pour chaque brin du réseau routier, pour chaque style de conduite et pour chaque état thermique du véhicule. A partir de la vitesse moyenne acquise à l'étape A, cette étape met un oeuvre une pluralité de modèles unitaires de polluants : un modèle pour chaque style de conduite et chaque état thermique du véhicule. Le modèle de débit de véhicules est un modèle qui relie le débit de véhicules, la vitesse moyenne de véhicules et les données macroscopiques du brin considéré. Ainsi, chaque modèle unitaire de polluants a en entrée une vitesse moyenne de chaque brin du réseau routier et des données macroscopiques du brin et en sortie une quantité unitaire de polluants.

Selon un mode de réalisation, cette étape peut mettre en oeuvre au choix (pour chaque style de conduite et pour chaque état thermique de véhicule) :
- Un modèle unitaire mésoscopique des émissions de polluants, et/ou
- Un modèle de profil de vitesse, et un modèle unitaire microscopique des émissions de polluants.

On appelle modèle microscopique un modèle précis prenant en entrée une vitesse instantanée et ayant en sortie une quantité unitaire de polluants émis instantanée, pouvant être basé sur la physique. Il peut s'agir par exemple du modèle CMEM de l'art antérieur. Un tel modèle nécessite des ressources informatiques importantes pour une utilisation pour un grand territoire, mais reste adapté pour un territoire de taille limitée (par exemple quelques rues). On appelle modèle mésoscopique un modèle prenant en entrée une vitesse moyenne, et des données macroscopiques du réseau routier, et ayant en sortie une quantité unitaire de polluants moyenne. Un tel modèle mésoscopique est plus précis qu'un modèle macroscopique, tel que le modèle COPERT. On appelle profil de vitesse, la variation de la vitesse du véhicule le long d'une route d'un réseau routier.

Lorsque cette étape a la capacité de mettre en oeuvre le modèle unitaire mésoscopique des émissions de polluants et le modèle unitaire des émissions de polluants, le choix entre le modèle microscopique et le modèle microscopique peut être dépendant de la taille du réseau routier considéré. Par exemple, pour un réseau routier de taille importante (représentant par exemple toute une ville) le procédé peut mettre en oeuvre le modèle mésoscopique, et pour un réseau de taille limitée (par exemple un quartier d'une ville) le procédé peut mettre en oeuvre le modèle microscopique. Un seuil dimensionnel peut être prédéterminé pour le choix automatique du type de modèle. Ainsi, le procédé peut être mise en oeuvre à différentes échelles de réseau routier, et peut optimiser les ressources informatiques (mémoire et processeurs) en utilisant le modèle plus précis si la taille du réseau routier est limitée, afin d'améliorer la précision de la quantité unitaire d'émissions polluantes déterminée.

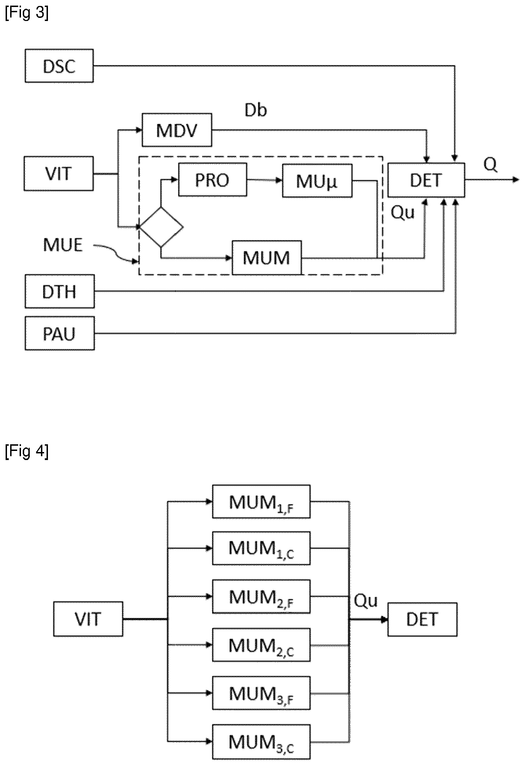

La figure 3 illustre, schématiquement et de manière non limitative, les étapes du procédé selon ce mode de réalisation de l'invention. Les étapes identiques au mode de réalisation de la figure 1 ne sont pas redécrits en détail. Pour ce mode de réalisation, la détermination de la quantité unitaire Qu de la quantité de polluants émis par le modèle unitaire d'émission MUE est mise en oeuvre par un modèle unitaire mésoscopique MUM des émissions de polluants, et/ou par un modèle de profil de vitesse PRO et un modèle unitaire microscopique MUµ des émissions de polluants. Le type de modèle unitaire utilisé peut dépendre notamment de la taille du réseau routier considéré, cette étape de sélection du type du modèle unitaire est illustrée par un losange. En outre, cette figure illustre la prise en compte d'un parc automobile PAU, cette mise en oeuvre optionnelle sera détaillée avec l'étape D.

La figure 4 illustre, schématiquement et de manière non limitative, l'étape de détermination des émissions de polluants au moyen du modèle mésoscopique MUM des émissions de polluants. Pour le mode de réalisation illustré, on considère trois styles de conduites : souple, moyenne et agressive et deux états thermiques : système de post-traitement chaud ou froid. Ainsi, cette étape comprend six modèles :
- Un modèle MUM_{1,F} pour le style de conduite souple et le système de post-traitement froid ;
- Un modèle MUM_{1,C} pour le style de conduite souple et le système de post-traitement chaud ;
- Un modèle MUM_{2,F} pour le style de conduite moyen et le système de post-traitement froid ;
- Un modèle MUM_{2,C} pour le style de conduite moyen et le système de post-traitement chaud ;
- Un modèle MUM_{3,F} pour le style de conduite agressif et le système de post-traitement froid ;
- Un modèle MUM_{3,C} pour le style de conduite agressif et le système de post-traitement chaud.

Chacun de ces modèles a pour entrée la vitesse moyenne VIT et en sortie une quantité unitaire Qu de polluants émis par un unique véhicule.

Pour cette réalisation, on peut construire le modèle unitaire mésoscopique par une régression multivariable par véhicule, par polluant, par style de conduite et, pour un état thermique qui donne les émissions unitaires par brin. Chaque modèle unitaire mésoscopique de polluants a en entrée une vitesse moyenne de chaque brin du réseau routier et des données macroscopiques du brin et en sortie une quantité unitaire de polluants. Cette régression peut être réalisée à l'aide de méthodes analytiques, d'apprentissage automatique (« machine learning ») ou d'apprentissage profond (« deep learning »), de préférence par apprentissage automatique supervisé, de manière préférée par apprentissage automatique supervisé de régression. Cet apprentissage automatique ou profond est entraîné sur une base d'apprentissage formé sur un réseau routier d'apprentissage comprenant une quantité unitaire de polluants émis au sein dudit réseau routier d'apprentissage, des données macroscopiques desdits brins dudit réseau routier d'apprentissage, et la vitesse moyenne des véhicules sur lesdits brins dudit réseau routier d'apprentissage. Le réseau routier d'apprentissage est un réseau routier pour lequel on connaît une quantité unitaire de polluants émis pour la construction du modèle d'unitaire mésoscopique. Le réseau routier d'apprentissage peut être différent ou identique du réseau routier considéré pour la mise en oeuvre du procédé. Le cas échéant le réseau d'apprentissage peut être identique au réseau d'apprentissage mis en oeuvre à l'étape B.

Selon un exemple de réalisation, le modèle unitaire mésoscopique des émissions de polluants *Q_{uM}* peut s'écrire :
*Q_{uM} = g*(*Top, pente, Vmoy, Vlim*) avec Top la topologie du brin routier, pente la pente du brin routier, V_{moy} la vitesse moyenne sur le brin routier et Vₗᵢₘ la limitation de vitesse sur le brin. Top, pente sont des exemples de données macroscopiques. De manière générale, la fonction g peut dépendre d'autres données macroscopiques du réseau routier telles que celles listées précédemment (par exemple, le type de brin routier, le nombre de voies du brin routier, la vitesse maximale, la courbure du brin routier - en particulier pour la détermination de la quantité des émissions de particules, et la longueur du brin routier).

La fonction g peut être déterminée à partir d'un algorithme d'apprentissage supervisé de régression, tel qu'une machine à vecteur de support (SVM de l'anglais « support vector machine »), un réseau de neurones, une forêt aléatoire ou une combinaison de ces méthodes.

A titre d'exemple non limitatif, le procédé peut mettre en oeuvre un réseau de neurones avec deux couches cachées de vingt et quinze neurones respectivement, ou peut mettre en oeuvre une forêt aléatoire avec vingt estimateurs (ou arbres) de profondeur égale à 15, ou tout algorithme équivalent.

Selon un aspect, cette étape peut inclure une méthode de validation, de préférence une méthode de validation croisée, notamment une méthode de validation croisée à k-blocs (« k-fold »). Cette méthode de validation croisée permet de réduire les problèmes de « surapprentissage » et d'améliorer la précision du modèle.

Par exemple, la détermination du modèle unitaire mésoscopique peut mettre en oeuvre les étapes décrites dans la demande de brevet FR3122011 pour chaque style de conduite et pour chaque étape thermique du véhicule.

Pour le mode de réalisation mettant en oeuvre la détermination d'un profil de vitesse et d'un modèle unitaire microscopique des émissions de polluants, on peut déterminer le profil de vitesse par une régression multivariable par véhicule, par polluant, par style de conduite et, pour un état thermique. Cette régression peut être réalisée à l'aide de méthodes analytiques, d'apprentissage automatique (« machine learning ») ou d'apprentissage profond (« deep learning »), de préférence par apprentissage automatique supervisé, de manière préférée par apprentissage automatique supervisé de régression. Cet apprentissage automatique ou profond est entraîné sur une base d'apprentissage formée sur un réseau routier d'apprentissage comprenant une vitesse instantanée des véhicules au sein dudit réseau routier d'apprentissage, des données macroscopiques desdits brins dudit réseau routier d'apprentissage, et la vitesse moyenne des véhicules sur lesdits brins dudit réseau routier d'apprentissage. Le réseau routier d'apprentissage est un réseau routier pour lequel on connaît des vitesses instantanées de véhicules pour la construction du modèle d'unitaire mésoscopique. Le réseau routier d'apprentissage peut être différent ou identique du réseau routier considéré pour la mise en oeuvre du procédé. Le cas échéant le réseau d'apprentissage peut être identique au réseau d'apprentissage mis en oeuvre à l'étape B.

Selon un exemple de réalisation, le modèle de profil de vitesse *Vₚᵣₒ* peut s'écrire :
*Vₚᵣₒ*(*t*) *= h*(*Top, pente, Vmoy, t*) avec Top la topologie du brin routier, pente la pente du brin routier, V_{moy} la vitesse moyenne sur le brin routier et t le temps. Top, pente sont des exemples de données macroscopiques. De manière générale, la fonction h peut dépendre d'autres données macroscopiques du réseau routier telles que celles listées précédemment (par exemple, le type de brin routier, le nombre de voies du brin routier, la vitesse maximale et la longueur du brin routier).

La fonction h peut être déterminée à partir d'un algorithme d'apprentissage supervisé de régression, tel qu'une machine à vecteur de support (SVM de l'anglais « support vector machine »), un réseau de neurones, une forêt aléatoire ou une combinaison de ces méthodes. A titre d'exemple non limitatif, le procédé peut mettre en oeuvre un réseau de neurones avec deux couches cachées de vingt et quinze neurones respectivement, ou peut mettre en oeuvre une forêt aléatoire avec vingt estimateurs (ou arbres) de profondeur égale à 15, ou tout algorithme équivalent.

Selon un aspect, cette étape peut inclure une méthode de validation, de préférence une méthode de validation croisée, notamment une méthode de validation croisée à k-blocs (« k-fold »). Cette méthode de validation croisée permet de réduire les problèmes de « surapprentissage » et d'améliorer la précision du modèle.

Par exemple, la détermination du profil de vitesse peut mettre en oeuvre les étapes décrites dans la demande de brevet FR3096822 (US2022/0215749), ou FR3115256 (US2022/0118986), ou FR3130432 pour chaque style de conduite et pour chaque état thermique du véhicule.

De manière avantageuse, le modèle unitaire microscopique des émissions de polluants peut être construit à partir d'une modélisation de la physique d'un véhicule (par exemple, type de motorisation, système de post-traitement, etc.). Ce modèle unitaire microscopique relie un profil de vitesse d'un véhicule à une quantité de polluants émis par le véhicule. Ainsi, chaque modèle unitaire microscopique de polluants a en entrée un profil de vitesse de chaque brin du réseau routier et des données macroscopiques du brin et en sortie une quantité unitaire de polluants.

Alternativement, on peut déterminer le profil de vitesse à l'aide de méthodes d'apprentissage automatique (« machine learning ») ou d'apprentissage profond (« deep learning »), de préférence par apprentissage automatique supervisé, de manière préférée par apprentissage automatique supervisé de régression. Cet apprentissage automatique ou profond est entraîné sur une base d'apprentissage formé sur un réseau routier d'apprentissage comprenant une vitesse instantanée des véhicules au sein dudit réseau routier d'apprentissage, des données macroscopiques desdits brins dudit réseau routier d'apprentissage, et une quantité des émissions de polluants émis sur lesdits brins dudit réseau routier d'apprentissage. Le réseau routier d'apprentissage est un réseau routier pour lequel on connaît des vitesses instantanées de véhicules pour la construction du modèle d'unitaire mésoscopique. Le réseau routier d'apprentissage peut être différent ou identique du réseau routier considéré pour la mise en oeuvre du procédé. Le cas échéant le réseau d'apprentissage peut être identique au réseau d'apprentissage mis en oeuvre à l'étape B.

Selon un exemple de réalisation, le modèle unitaire des émissions de polluant *Q*_{*MU*µ} peut s'écrire :
*M*_{*MU*µ} *= j*(*Top, pente, Vpro*(*t*)) avec Top la topologie du brin routier, pente la pente du brin routier, Vpro le profil de vitesse sur le brin routier et t le temps. Top, pente sont des exemples de données macroscopiques. De manière générale, la fonction h peut dépendre d'autres données macroscopiques du réseau routier telles que celles listées précédemment (par exemple, le type de brin routier, le nombre de voies du brin routier, la vitesse maximale et la longueur du brin routier).

La fonction j peut être déterminée à partir d'un algorithme d'apprentissage supervisé de régression, tel qu'une machine à vecteur de support (SVM de l'anglais « support vector machine »), un réseau de neurones, une forêt aléatoire ou une combinaison de ces méthodes. A titre d'exemple non limitatif, le procédé peut mettre en oeuvre un réseau de neurones avec deux couches cachées de vingt et quinze neurones respectivement, ou peut mettre en oeuvre une forêt aléatoire avec vingt estimateurs (ou arbres) de profondeur égale à 15, ou tout algorithme équivalent.

Selon un aspect, cette étape peut inclure une méthode de validation, de préférence une méthode de validation croisée, notamment une méthode de validation croisée à k-blocs (« k-fold »). Cette méthode de validation croisée permet de réduire les problèmes de « surapprentissage » et d'améliorer la précision du modèle.

Par exemple, la détermination de la quantité unitaire microscopique des émissions de polluants peut mettre en oeuvre la méthode CMEM de l'art antérieur, ou correspondre aux étapes de la méthode décrite dans la demande de brevet FR3122011 (US 2022/0335822). Un tel modèle peut être calibré avec des conditions de roulage en conditions réelles pour donner une estimation fiable de la quantité instantanée de polluants émis sur le brin routier considéré.

### D - Détermination d'une quantité agrégée de polluants

Lors de cette étape, on détermine, pour chaque brin du réseau routier, une quantité agrégée dudit au moins polluant émis par l'ensemble des véhicules, à partir :
- Du débit des véhicules déterminé à l'étape B,
- De la quantité unitaire des émissions de polluants déterminé à l'étape C,
- De la répartition des états thermiques des véhicules,
- De la répartition des styles de conduite.

En d'autres termes, la quantité unitaire des polluants émis étant déterminée à l'étape C pour chaque état thermique et chaque style de conduite, on multiplie chaque quantité unitaire par la part représentative du style de conduite et de l'état thermique pour obtenir une quantité unitaire représentative de tous les styles de conduite et de tous les états thermiques de véhicule. Puis cette quantité unitaire représentative est multipliée par le débit de véhicule déterminé à l'étape B, pour prendre en compte le nombre de véhicules, et obtenir une quantité agrégée pour l'ensemble des véhicules.

Selon une option de réalisation, la détermination de la quantité agrégée de polluants émis par l'ensemble de véhicules peut prendre en compte en outre le parc automobile utilisé pour le réseau routier considéré. Le parc automobile peut être le parc actuel de véhicules traversant le réseau routier considéré, en l'occurrence le réseau routier d'apprentissage. Il peut être défini par l'utilisateur en fonction des historiques d'enregistrement et/ou de la connaissance préalable du parc de véhicules de la zone considérée (c'est-à-dire le réseau routier). Ainsi, le parc prédéfini est une répartition, en nombre ou en pourcentage de véhicules, de chaque véhicule prédéterminé circulant sur la portion de réseau routier. Au sein du parc automobile, les véhicules sont catégorisés, la catégorie du véhicule peut inclure notamment une norme européenne d'émissions polluantes, une cylindrée, un type de motorisation (essence, diesel, électrique, etc.), et une technologie de post-traitement. Cette décomposition du parc automobile peut être effectuée pour les véhicules particuliers, les poids lourds, les véhicules utilitaires légers, les deux-roues, etc. Grâce à la prise en compte du parc automobile, la détermination des émissions polluantes est plus représentative des conditions réelles.

A titre d'exemple non limitatif, il est possible de créer pour le parc automobile du réseau routier un véhicule moyen qui est la combinaison linéaire de véhicules connus. Ces véhicules peuvent notamment être découpés en quatre catégories : les véhicules légers, les véhicules utilitaires légers, les poids-lourds et les deux-roues. Au sein de ces catégories les véhicules sont triés en sous-catégories en particulier en fonction de leur motorisation, de leur norme d'émission (par exemple, Euro 4, Euro 5 ou Euro 6), de leur poids et/ou de leur dispositif de post-traitement. A partir de ces catégories, sous catégories et de la répartition des véhicules (portion des véhicules de chaque catégorie et sous-catégorie), on peut définir un véhicule moyen qui est représentatif de tout le parc. Ce véhicule moyen peut évoluer en fonction des politiques d'accès aux vieux véhicules, des interdictions poids-lourd. Ensuite, on applique les caractéristiques (poids, norme d'émissions, ...) de ce véhicule moyen à la multiplication de la quantité unitaire des émissions de polluant par le débit de véhicule, pour rendre la quantité agrégée des émissions de polluants la plus précise possible.

La figure 2 illustre, schématiquement et de manière non limitative, les étapes du procédé selon cette mise en oeuvre. Les étapes identiques à celles du mode de réalisation de la figure 1 ne sont pas redétaillées. Pour cette configuration, l'étape de détermination DET de la quantité agrégée de polluants émis prend en compte une répartition du parc automobile PAU.

On rappelle que la figure 3 décrite ci-dessus comprend également optionnellement cette mise en oeuvre.

Le procédé peut comporter en outre une étape facultative d'affichage de la quantité de polluants déterminée pour au moins un brin du réseau routier considéré. Lors de cette étape facultative, on peut afficher la quantité des polluants émis sur une carte routière. Cet affichage peut prendre la forme d'une note ou d'un code couleur. Le cas échéant, une note ou une couleur peut être associée à chaque brin du réseau routier. Cet affichage peut être réalisé à bord d'un véhicule : sur le tableau de bord, sur un dispositif portatif autonome, tel qu'un appareil de géolocalisation (de type GPS), un téléphone portable (de type téléphone intelligent), ou tout système analogue. Il est également possible d'afficher la quantité des émissions polluantes sur un site internet. De plus, la quantité des polluants émis peut être partagée avec les pouvoirs publics (par exemple gestionnaire de la voirie) et les entreprises de travaux publics. Ainsi, les pouvoirs publics et les entreprises de travaux publics peuvent optimiser l'infrastructure routière pour en améliorer les émissions polluantes.

Il est possible d'utiliser des modèles de qualité de l'air pour simuler la dispersion atmosphérique de ces émissions et ainsi obtenir des informations précises et localisée des niveaux de concentration des différents polluants par mètre cube. Ces modèles nécessitent de prendre en compte en plus des émissions du trafic routier les autres sources contributrices d'émission telles que l'industrie, le chauffage, ou encore la pollution de fond à plus large échelle (régionale, nationale).

### Exemples

Les caractéristiques et avantages du procédé selon l'invention apparaîtront plus clairement à la lecture de l'exemple d'application ci-après.

Pour le premier exemple, on considère un brin d'un réseau routier, sur laquelle circule un véhicule de type Euro 5 diesel, et on détermine la quantité de CO₂ émis par le véhicule sur le brin en fonction de la vitesse moyenne du trafic :
- Au moyen du modèle macroscopique COPERT de l'art antérieur (ce modèle ne dépend pas de la vitesse limite du brin routier considéré),
- Au moyen du modèle unitaire mésoscopique des émissions de polluants, selon un mode de réalisation de l'étape C du procédé selon l'invention, pour une vitesse limite du brin routier à 70 km/h,
- Au moyen du modèle unitaire mésoscopique des émissions de polluants, selon un mode de réalisation de l'étape C du procédé selon l'invention, pour une vitesse limite du brin routier à 130 km/h.

La détermination en fonction de la vitesse moyenne du trafic permet de prendre en compte la congestion du brin.

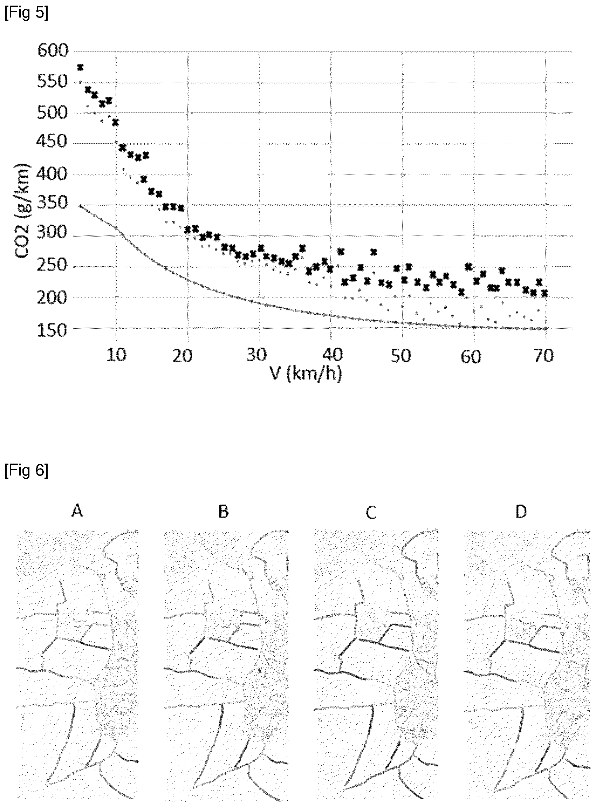

La figure 5 illustre, pour cet exemple des courbes des émissions de CO₂ en g/km en fonction de la vitesse de trafic V en km/h. La ligne correspond aux émissions déterminées par la méthode COPERT selon l'art antérieur. Les points correspondent aux émissions déterminées par le modèle unitaire des émissions avec une vitesse limite à 70 km/h, et les croix correspondent aux émissions déterminées par le modèle unitaire des émissions avec une vitesse limite à 130 km/h.

On remarque que le modèle mésoscopique prend en compte la congestion. En effet, deux brins ayant les mêmes descripteurs à part leur vitesse limite, pour le brin ayant la vitesse limite la plus faible, soit le brin le moins congestionné, les émissions sont plus faibles que pour le brin avec la vitesse limite la plus forte. Le modèle macroscopique COPERT, quant à lui, ne prend pas en compte la congestion et sous-estime les émissions, d'autant plus que la congestion est grande. Ainsi, le procédé selon l'invention permet une détermination précise de la quantité agrégée de polluants émis.

Le deuxième exemple concerne la détermination des émissions de polluants pour un réseau routier au moyen du modèle mésoscopique selon l'étape C, avec une distinction de trois styles de conduite : doux, moyen et agressif, et au moyen du modèle macroscopique COPERT.

Les figures 6A à 6D représentent, schématiquement et de manière non limitative, la quantité de polluants émis sur un réseau routier (en l'occurrence la quantité de NOx). Sur cette figure, plus le brin routier est sombre plus la quantité de NOx émis est élevé. La figure 6A correspond au style de conduite doux, la figure 6B correspond au style de conduite moyen, la figure 6C correspond au style de conduite agressif et la figure 6D correspond à la quantité déterminée par la méthode COPERT. On remarque que les émissions avec une conduite souple sont plus faibles qu'avec une conduite moyenne, et avec une conduite moyenne plus faibles qu'avec une conduite agressive. La méthode COPERT se rapproche d'une conduite moyenne.

Le tableau 1 indique pour cet exemple la quantité de polluants émis (NO_{X}, CO₂ et particules PMhe) pour ces quatre configurations.

**[Table 1]**

| | Doux | Moyen | Agressif | COPERT |
|---|---|---|---|---|
| NOx (t/an) | 33 | 43 | 57 | 44 |
| CO₂ (kt/an) | 15 | 19 | 23 | 19 |
| PMhe (t/an) | 17 | 32 | 36 | 31 |

On remarque également que la méthode COPERT se rapproche d'un style de conduite moyen.

Pour le troisième exemple, on applique le procédé selon l'invention à une modification d'infrastructure pour laquelle une rue passant actuellement dans une voie sous-terraine est aplanie et de nouvelles intersections sont ajoutées. Ainsi, plusieurs brins qui avaient une pente négative pour la descente dans la voie sous-terraine et positive pour la remontée se retrouvent à pente nulle. Plusieurs feux de circulation et céder le passage ont été rajoutés pour la gestion des nouvelles intersections. On considère que le comportement de vitesse en trémie est différent d'un comportement de vitesse sans trémie. On applique le comportement des brins successeurs de la trémie aux brins modifiés.

On peut séparer l'influence de la pente, des feux de circulation et de la modification de vitesse. Dans le modèle de débit, la modification de la vitesse influe sur le modèle de débit.

Ainsi, il y a une diminution de la vitesse par rapport à la vitesse de descente dans la voie sous-terraine et une augmentation de la vitesse par rapport à la remontée. Dans ce cas à vitesse limite égale ; la diminution de la vitesse tend à faire augmenter le débit et augmenter les émissions, et l'augmentation de la vitesse tend à faire diminuer le débit et diminuer les émissions.

De même pour la pente, le passage d'une pente négative à une pente nulle fait augmenter les émissions quand le passage d'une pente positive à une pente nulle fait diminuer les émissions. L'ajout des feux fait aussi augmenter les émissions. Globalement la baisse des émissions liée à la baisse du débit est plus importante que l'augmentation des émissions liée à la pente, pour des gains de l'ordre de 20% en NOx et en CO₂.

De plus, pour apaiser la ville et limiter la mortalité des piétons lors d'un choc avec un véhicule motorisé, il a été choisi de baisser la vitesse limite en ville de 50 km/h à 30 km/h dans plusieurs grandes villes Françaises. Une baisse de la vitesse moyenne du trafic des véhicules est espérée.

Comme le présentent les courbes du modèle macroscopique de l'état de l'art COPERT, une baisse de la vitesse moyenne en deçà de 50 km/h aura tendance à faire augmenter les émissions (cf. figure 4). Le modèle unitaire mésoscopique perçoit le même phénomène, mais ce phénomène est atténué par le fait que le modèle mésoscopique prend en compte la congestion représentée par la différence entre la vitesse moyenne et la vitesse limite. Donc une diminution de la vitesse limite aura tendance à diminuer les émissions si tant est que la congestion via l'apaisement des comportements se réalise également.

La force du modèle mésoscopique selon l'invention est qu'il prend en compte le style de conduite. On prend comme hypothèse que la réduction de la vitesse aura tendance à apaiser le style de conduite.

Pour la modification de la vitesse moyenne, on prend une hypothèse forte de diminution de 25% de la vitesse trafic. Les quantités d'émission de polluants sont présentées dans la Tableau 2 pour différentes répartitions des styles de conduite avant et sans modification de la limitation de vitesse, et en comparaison avec la méthode COPERT.

**[Table 2]**

| | Configuration | NOₓ [t/an] | CO₂ [kt/an] | PM_{HE} [t/an] |
|---|---|---|---|---|
| Avant modification | Nominal avec trémie | 192 | 58 | 88 |
| | COPERT avec trémie | 116 | 36 | / |
| Vitesse limitée | Répartition 1 | 204 (+6%) | 62 (+7%) | 82 (-7%) |
| | Répartition 2 | 191 (-0,5%) | 59 (+2%) | 73 (-17%) |
| | Répartition 3 | 180 (-6%) | 55 (-5%) | 62 (-29%) |
| | Répartition 4 | 175 (-9%) | 54 (-7%) | 57 (-35%) |
| | Répartition 4 | 171 (-11%) | 53 (-27%) | 51 (-42%) |
| | COPERT | 121 (+4%) | 38 (+5,5%) | / |

La répartition 1 correspond à la répartition des styles de conduites suivantes : 25 % de conduite douce, 50 % de conduite moyenne et 25 % de conduite agressive.

La répartition 2 correspond à la répartition des styles de conduites suivantes : 40 % de conduite douce, 45 % de conduite moyenne et 15 % de conduite agressive.

La répartition 3 correspond à la répartition des styles de conduites suivantes : 60 % de conduite douce, 30 % de conduite moyenne et 10 % de conduite agressive.

La répartition 4 correspond à la répartition des styles de conduites suivantes : 80 % de conduite douce, 10 % de conduite moyenne et 10 % de conduite agressive.

On remarque par cet exemple, l'importance de prendre en compte le style de conduite pour déterminer la quantité des polluants émis. En effet, il y a des variations importantes en fonction de la répartition considérée. Grâce à l'utilisation d'un modèle unitaire des émissions de polluant par style de conduite, il est donc possible de déterminer précisément la quantité de polluants émis.

## Revendications

1. Procédé de détermination d'une quantité (Q) d'au moins un polluant émis par un ensemble de véhicules au sein d'un réseau routier, ledit réseau routier comprenant un ensemble de brins **caractérisés par** des données macroscopiques parmi lesquelles la topographie desdits brins, le déplacement desdits véhicules au sein dudit réseau routier étant **caractérisé par** au moins deux styles de conduite et par au moins deux états thermiques des véhicules, **caractérisé en ce qu'**on met en oeuvre les étapes suivantes, toutes ou partie d'entre elles étant notamment mises en oeuvre par des moyens informatiques :
a. On acquiert une vitesse moyenne de véhicule (VIT) pour chaque brin dudit réseau routier ;
b. On détermine un débit de véhicules (Db) pour chaque brin dudit réseau routier à partir de ladite vitesse moyenne (VIT) acquise au moyen d'un modèle de débit de véhicules (MDV) qui relie le débit de véhicules, la vitesse moyenne de véhicules et lesdites données macroscopiques dudit brin ;
c. Pour chaque brin, on détermine, pour chaque style de conduite et pour chaque état thermique des véhicules, une quantité unitaire (Qu) dudit au moins un polluant émis par un unique véhicule à partir de ladite vitesse moyenne acquise (VIT) et d'un modèle unitaire d'émissions de polluants (MUE) ; et
d. On détermine pour chaque brin dudit réseau routier une quantité agrégée (Q) dudit au moins un polluant pour l'ensemble des véhicules, à partir dudit débit de véhicules déterminé (DB), desdites quantités unitaires (Qu) dudit au moins un polluant émis par un unique véhicule, et en fonction d'une répartition des styles de conduite (DSC) des véhicules au sein du réseau routier, et d'une répartition desdits états thermiques des véhicules (DTH) au sein du réseau routier.

2. Procédé selon la revendication 1, dans lequel on détermine ladite quantité agrégée (Q) d'au moins un polluant émis pour l'ensemble des véhicules en considérant en outre des données d'un parc automobile (PAU) associé audit réseau routier considéré.

3. Procédé selon l'une des revendications précédentes, dans lequel ledit modèle unitaire d'émissions de polluants (MUE) est un modèle mésoscopique unitaire d'émissions de polluants (MUM), ledit modèle mésoscopique unitaire d'émissions de polluants (MUM) étant une régression multivariable de la quantité des émissions de polluant par style de conduite et par état thermique du véhicule.

4. Procédé selon la revendication 3, dans lequel on construit ledit modèle mésoscopique unitaire d'émissions de polluants (MUM) par une méthode d'apprentissage automatique ou d'apprentissage profond entraîné sur une base d'apprentissage formée sur un réseau routier d'apprentissage comprenant la vitesse moyenne de véhicule (VIT) sur les brins dudit réseau routier d'apprentissage, des données macroscopiques desdits brins dudit réseau routier d'apprentissage, et des données acquises d'une quantité unitaire d'émissions dudit au moins un polluant sur ledit réseau routier d'apprentissage.

5. Procédé selon l'une des revendications 1 ou 2, dans lequel on détermine une quantité unitaire dudit au moins un polluant émis par un unique véhicule au moyen des étapes suivantes :
i. On détermine, pour chaque brin, pour chaque style de conduite, un profil de vitesse (PRO) dudit unique véhicule sur ledit brin à partir de ladite vitesse moyenne et desdites données macroscopiques dudit brin ;
ii. Pour chaque brin, on détermine, pour chaque style de conduite et pour chaque état thermique dudit véhicule, ladite quantité unitaire dudit au moins un polluant au moyen d'un modèle microscopique unitaire d'émissions de polluants (MUµ) appliqué audit profil de vitesse (PRO) dudit unique véhicule.

6. Procédé selon la revendication 5, dans lequel on construit ledit profil de vitesse (PRO) au moyen d'un modèle de profil de vitesse construit par une méthode d'apprentissage automatique ou d'apprentissage profond entraîné sur une base d'apprentissage formé sur un réseau routier d'apprentissage, ladite base d'apprentissage comprenant la vitesse moyenne de véhicule sur les brins dudit réseau routier d'apprentissage, des données macroscopiques desdits brins dudit réseau routier d'apprentissage, et des données acquises de vitesse instantanée d'au moins un véhicule sur lesdits brins dudit réseau routier d'apprentissage.

7. Procédé selon la revendication 5 ou 6, dans lequel on construit ledit modèle microscopique unitaire d'émissions de polluants (MUµ) par une méthode d'apprentissage automatique ou d'apprentissage profond entraîné sur une base d'apprentissage formé sur un réseau routier d'apprentissage comprenant le profil de vitesse de véhicules au sein dudit réseau routier d'apprentissage, des données macroscopiques desdits brins dudit réseau routier d'apprentissage, et des données acquises de quantité unitaire d'émissions de polluant sur lesdits brins dudit réseau routier d'apprentissage.

8. Procédé selon l'une des revendications précédentes, dans lequel lesdites données macroscopiques d'un réseau routier sont choisies parmi la topologie du brin du réseau routier, le nombre de voies du brin du réseau routier, la vitesse maximale autorisée du brin du réseau routier, la pente du brin du réseau routier, la signalisation du brin du réseau routier, la longueur du brin du réseau routier, de préférence lesdites données macroscopiques dudit réseau routier étant fournies par un système d'information géographique.

9. Procédé selon l'une des revendications précédentes, dans lequel on acquiert ladite vitesse moyenne des véhicules (VIT) par mesure et/ou au moyen d'un système d'information géographique.

10. Procédé selon l'une des revendications précédentes, dans lequel on construit ledit modèle de débit de véhicules (MDV) par une méthode d'apprentissage automatique ou d'apprentissage profond entraîné sur une base d'apprentissage formé sur un réseau routier d'apprentissage comprenant le débit de véhicules au sein dudit réseau routier d'apprentissage, des données macroscopiques desdits brins dudit réseau routier d'apprentissage, et la vitesse moyenne des véhicules sur lesdits brins dudit réseau routier d'apprentissage

11. Procédé selon l'une des revendications précédentes, dans lequel on affiche ladite quantité (Q) d'au moins un polluant émis par l'au moins un véhicule sur ledit au moins un brin dudit réseau routier sur une carte routière, de préférence au moyen d'un téléphone intelligent ou d'un système informatique.
